# FASCICULE DE BREVET EUROPEEN

(11) **EP 0 591 062 B1**
(45) Date de publication et mention de la délivrance du brevet: **27.11.1996**
(21) Numéro de dépôt: 93402411.8
(22) Date de dépôt: 01.10.1993
(51) Int. Cl.: B60S 1/60

(54) **Bras d'essuie-glace pour l'essuyage d'une vitre de phare de véhicule automobile comportant des moyens d'aspersion de la vitre en liquide de lavage**
Scheibenwischerarm zum Wischen der Scheibe eines Autoscheinwerfers mit Spritzmöglichheiten von Waschwasser auf die Scheibe
Wiper arm for wiping the glass of a motor vehicle headlight with means for spraying washing liquid on the glass

(30) Priorité: 02.10.1992 FR 9211706
(43) Date de publication de la demande: 06.04.1994
(73) Titulaire: PAUL JOURNEE S.A., F-92700 Colombes (FR)
(72) Inventeur: Journee, Maurice, F-60240 Reilly (FR)
(74) Mandataire: Lemaire, Marc

(56) Documents cités:
- EP-A- 0 208 960
- EP-A- 0 330 458
- WO-A-91/08933
- DE-A- 1 455 623
- DE-A- 3 125 625
- DE-C- 520 039
- FR-A- 2 646 801

## Description

La présente invention concerne un bras d'essuie-glace, notamment pour l'essuyage d'une vitre de phare de véhicule automobile comme décrit et représenté dans le document DE-A-31 25 625.

L'invention concerne plus particulièrement un bras d'essuie-glace du type comportant un corps en matière plastique et un conduit d'alimentation et d'aspersion en liquide de lavage de la vitre intégré au corps du bras d'essuie-glace.

Des exemples d'une telle conception de principe d'un bras d'essuie-glace sont décrits et représentés dans les documents FR-A-2.584.035 et FR-A-2.646.801.

Les modes de réalisation proposés dans ces deux documents sont particulièrement difficiles à mettre en oeuvre et/ou ne permettent pas d'assurer de manière efficace l'arrosage de la portion de la vitre à essuyer au voisinage de la lame ou raclette d'essuyage associée au bras d'essuie-glace.

Ces inconvénients résultent notamment que, dans les différents modes de réalisation proposés par ces deux documents, le conduit d'alimentation en liquide et d'aspersion est agencé sensiblement dans le plan médian du corps en matière plastique du bras d'essuie-glace ; il s'étend donc longitudinalement sur une longueur très importante et dans une zone dans laquelle il n'est pas utile de prévoir des orifices d'aspersion. De plus, ces conceptions ne sont pas adaptées à la réalisation de bras courts utilisables dans le cadre de la fabrication d'essuie-phares.

Afin de remédier à ces inconvénients, l'invention propose un bras d'essuie-glace, notamment pour l'essuyage d'une vitre de phare de véhicule automobile, du type comportant un corps en matière plastique et un conduit d'alimentation et d'aspersion en liquide de lavage de la vitre intégré au corps du bras d'essuie-glace, une partie principale allongée du corps comprenant deux joues latérales parallèles qui s'étendent selon la direction longitudinale générale du bras et qui sont reliées entre elles par un dos de manière que la partie principale du corps présente, en section par un plan transversal, une forme en U renversé, caractérisé en ce que la partie principale comporte au moins un tronçon d'aspersion qui est formé dans une desdites joues latérales, et en ce que des orifices d'aspersion associés au tronçon d'aspersion débouchent au voisinage du bord libre inférieur de cette joue latérale.

Selon divers modes de réalisation de l'invention :
- le tronçon d'aspersion est constitué par une rainure formée dans le bord inférieur libre de la joue latérale et par une plaque de fermeture de la face ouverte de la rainure dans laquelle sont formés les orifices d'aspersion ;
- la partie principale comporte deux tronçons d'aspersion formés symétriquement dans chacune des deux joues latérales ;
- le bras comporte une plaque commune de fermeture des deux rainures formées respectivement dans les bords inférieurs libres des deux joues latérales ;
- les deux tronçons d'aspersion sont reliés à un tronçon commun d'alimentation en liquide de lavage ;
- une portion du tronçon d'alimentation est constituée par une rainure formée dans la face inférieure de l'extrémité du corps du bras d'essuie-glace prévue pour être relié à des moyens d'entraînement en rotation du bras et par une partie de la plaque de fermeture commune aux deux tronçons d'aspersion ;
- le bras comporte un balai d'essuie-glace comportant une lame d'essuyage et des moyens pour relier la lame au corps du bras d'essuie-glace, les moyens de liaison s'étendant longitudinalement à l'intérieur de la partie principale du corps du bras d'essuie-glace entre les joues latérales de ce corps ;
- chacun des tronçons d'aspersion s'étend sensiblement sur la moitié de la longueur de la lame d'essuyage.

D'autres caractéristiques et avantages de l'invention apparaîtront à la lecture de la description détaillée qui va suivre pour la compréhension de laquelle on se reportera au dessin annexé dans lequel :
- la figure 1 est une vue de dessous d'un bras d'essuie-glace réalisé conformément aux enseignements de l'invention ;
- la figure 2 est une vue en section selon la ligne 2-2 et à plus grande échelle de la partie médiane du bras d'essuie-glace illustré à la figure 1.

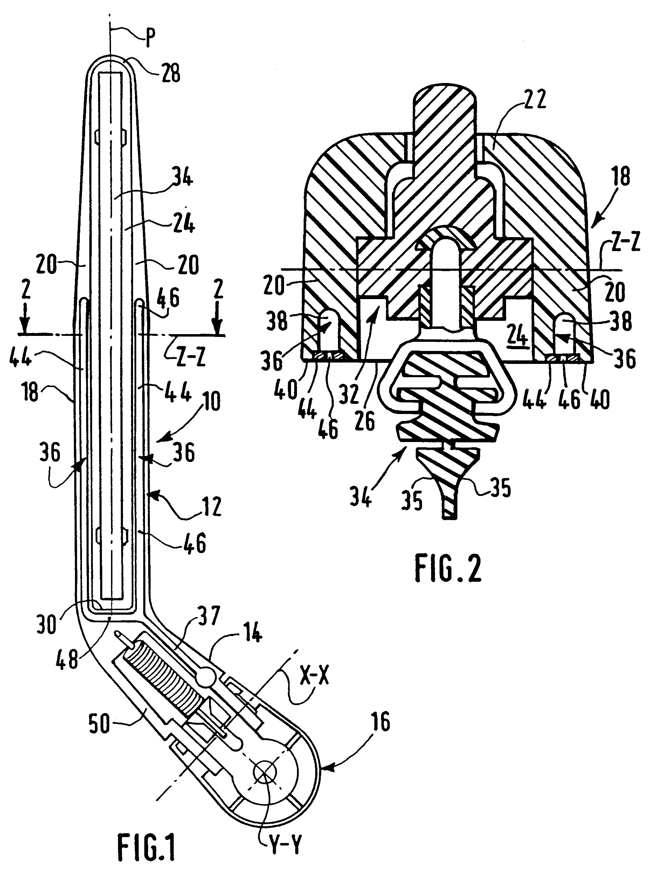

On a représenté à la figure 1 un bras d'essuie-glace 10 destiné notamment à permettre l'essuyage de la vitre avant d'un phare de véhicule automobile.

Selon une conception connue, le bras d'essuie-glace 10 comporte un corps en matière plastique 12 qui est articulé au voisinage de l'une de ses extrémités 14, autour d'un axe d'articulation X-X, sur une tête 16 d'entraînement du bras 10.

La tête 16 est conçue de manière à entraîner en rotation dans un mouvement alternatif, autour d'un axe Y-Y sensiblement perpendiculaire à l'axe X-X, le bras d'essuie-glace 10 par des moyens d'entraînement (non représentés) auxquels est reliée la tête 16.

Le corps en matière plastique 12 comporte une partie principale allongée 18 qui présente une symétrie de conception par rapport à un plan longitudinal médian P qui s'étend selon la direction générale du bras 10, et à laquelle est reliée l'extrémité de liaison 14 qui forme un coude avec la partie principale 18.

La partie principale 18 est un corps ou carter qui, en section par un plan transversal et comme on peut le voir à la figure 2, présente sensiblement la forme d'un U renversé.

Le corps principal 18 est à cet effet constitué par deux joues latérales parallèles 20 qui sont reliées entre elles par un dos supérieur 22.

Les joues latérales 20 et le dos 22 délimitent un espace interne sensiblement parallépipédique rectangle 24 ouvert à la face inférieure 26 et délimité à ses deux extrémités longitudinales par deux cloisons d'extrémités 28 et 30 qui prolongent les joues latérales 20.

Le logement interne 24 du corps principal 18 est prévu pour recevoir une structure 32 de support d'une lame d'essuyage 34 qui est montée articulée par rapport à la structure 32 autour d'un axe Z-Z perpendiculaire au plan P.

La conception de la structure de support 32 qui ne fait pas partie de la présente invention ne sera pas décrite ici plus en détail.

La lame d'essuyage 34 s'étend ainsi en-dessous de la face inférieure 26 sensiblement sur toute la longueur du corps principal creux 18 en matière plastique du bras 10.

Conformément à l'invention, le corps 18 comporte des moyens intégrés d'alimentation et d'aspersion en liquide d'une vitre de phare (non représentée).

Ces moyens comportent deux tronçons d'aspersion 36 et un tronçon d'alimentation 37.

Chacun des deux tronçons d'aspersion 36 est constitué par une rainure longitudinale 38 formée dans la face inférieure 40 constituant le bord libre d'une joue latérale 20.

Comme on peut le voir à la figure 2, chaque rainure 38 présente en section transversale sensiblement la forme d'un U renversé et elle est fermée par une plaque de fermeture 44 qui comporte une série de trous d'aspersion 46, éventuellement orientés.

Les deux tronçons d'aspersion 36 sont reliés entre eux par un tronçon de liaison 48 auquel est relié le tronçon d'alimentation 37.

Comme pour les tronçons d'aspersion 36, le tronçon de liaison 48 et le tronçon d'alimentation 37 sont constitués par des tronçons correspondants de rainures formées dans la face inférieure de la partie d'extrémité 14 du corps 12 du bras d'essuie-glace 10 et qui sont fermées par des parties correspondantes d'une plaque de fermeture commune, réalisée en une seule pièce, qui permet de fermer les rainures 38 des tronçons d'aspersion 36 et les rainures constituant les tronçons de liaison 48 et d'alimentation 37.

La plaque commune de fermeture 44 est par exemple une plaque métallique ou en matière plastique qui est sertie à chaud dans un logement de profil complémentaire formé dans la face inférieure 40 des joues latérales 20 et dans la face inférieure 50 de la partie d'extrémité 14 du corps 12.

Les différents tronçons du conduit d'alimentation et d'aspersion en liquide de lavage peuvent donc être réalisés de manière fiable et particulièrement économique et sont disposés dans une zone idéale pour permettre d'effectuer une aspersion efficace de la vitre à essuyer.

A cet effet, et comme on peut le constater sur la figure 1, les tronçons d'aspersion peuvent par exemple s'étendre sensiblement sur la moitié de la longueur de la partie principale 18 du corps 12 du bras d'essuie-glace 10 depuis l'extrémité 14 de ce dernier.

Les orifices d'aspersion 46 sont ainsi agencés directement en regard d'une portion correspondante de la lame d'essuyage 34 et le long des deux faces latérales 35 de cette dernière.

Le tronçon d'alimentation 37 est, selon une technique connue, relié à une source de liquide de lavage.

La conception des moyens d'aspersion qui vient d'être proposée est particulièrement économique et trouve notamment à s'appliquer à la réalisation de bras d'essuie-glace en matière plastique de faible longueur conçus pour le lavage des vitres des phares d'un véhicule automobile.

Cette conception permet de ne pas augmenter l'encombrement global du bras d'essuie-glace et notamment de ne pas nuire à l'efficacité de l'éclairage procuré par le phare devant lequel le bras d'essuie-glace se déplace ou reste en position de repos en regard d'un bord latéral de la vitre du phare.

## Revendications

1. Bras d'essuie-glace (10), notamment pour l'essuyage d'une vitre de phare de véhicule automobile, du type comportant un corps (12, 14, 18) en matière plastique et un conduit d'alimentation et d'aspersion en liquide de lavage de la vitre intégré au corps du bras d'essuie-glace, une partie principale allongée (18) du corps (12) comprenant deux joues latérales parallèles (20) qui s'étendent selon la direction longitudinale générale du bras (10) et qui sont reliées entre elles par un dos (22) de manière que la partie principale (18) du corps (12) présente, en section par un plan transversal, une forme en U renversé, caractérisé en ce que la partie principale (18) comporte au moins un tronçon (36) d'aspersion qui est formé dans une desdites joues latérales (20), et en ce que des orifices d'aspersion (46) associés au tronçon d'aspersion (36) débouchent au voisinage du bord libre inférieur (40) de cette joue latérale (20).

2. Bras d'essuie-glace selon la revendication 1, caractérisé en ce que le tronçon d'aspersion (36) est constitué par une rainure (38) formée dans le bord inférieur libre (40) de la joue latérale (20) et par une plaque (44) de fermeture de la face ouverte de la rainure dans laquelle sont formés les orifices d'aspersion (46).

3. Bras d'essuie-glace selon l'une des revendications 1 ou 2, caractérisé en ce que la partie principale (18) comporte deux tronçons d'aspersion (36) formés symétriquement dans chacune des deux joues latérales (20).

4. Bras d'essuie-glace selon la revendication 3 prise en combinaison avec la revendication 2, caractérisé en ce qu'il comporte une plaque (44) commune de fermeture des deux rainures (38) formées respectivement dans les bords inférieurs libres (40) des deux joues latérales (20).

5. Bras d'essuie-glace selon l'une des revendications 3 ou 4, caractérisé en ce que les deux tronçons d'aspersion (36) sont reliés à un tronçon commun d'alimentation (38).

6. Bras d'essuie-glace selon la revendication 5 prise en combinaison avec la revendication 4, caractérisé en ce qu'une portion du tronçon d'alimentation (37) est constituée par une rainure formée dans la face inférieure (50) de l'extrémité (14) du corps du bras d'essuie-glace prévue pour être reliée à des moyens (16) d'entraînement en rotation du bras, et par une partie de la plaque (44) de fermeture commune aux deux tronçons d'aspersion (36).

7. Bras d'essuie-glace selon l'une quelconque des revendications précédentes, caractérisé en ce qu'il comporte un balai d'essuie-glace comportant une lame d'essuyage (34) et des moyens (32) pour relier la lame (34) au corps (12) du bras d'essuie-glace (10), et en ce que lesdits moyens de liaison s'étendent longitudinalement à l'intérieur (24) de la partie principale (18) du corps (12) du bras d'essuie-glace (10) entre les joues latérales (20).

8. Bras d'essuie-glace selon la revendication 7, caractérisé en ce que chacun des tronçons d'aspersion (36) s'étend sensiblement sur la moitié de la longueur de la lame d'essuyage (34).

## Claims

1. Wiper arm (10), notably for wiping the headlamp glass of a motor vehicle, of the type having a plastic body (12, 14, 18) and a duct for supplying and spraying liquid for washing the glass integral with the body of the wiper arm, an elongate main part (18) of the body (12) comprising two parallel side cheeks (20) which extend in the overall longitudinal direction of the arm (10) and which are connected together by a web (22) so that the main part (18) of the body (12) has, in cross section through a transverse plane, the shape of an inverted U, characterised in that the main part (18) has at least one spraying section (36) which is formed in one of the said side cheeks (20), and in that spraying orifices (46) associated with the spraying section (36) open out in the vicinity of the bottom free edge (40) of this side cheek (20).

2. Wiper arm according to Claim 1, characterised in that the spraying section (36) consists of a groove (38) formed in the free bottom edge (40) of the side cheek (20) and a plate (44) closing off the open face of the groove in which the spraying orifices (46) are formed.

3. Wiper arm according to one of Claims 1 or 2, characterised in that the main part (18) has two spraying sections (36) formed symmetrically in each of the two side cheeks (20).

4. Wiper arm according to Claim 3 taken in combination with Claim 2, characterised in that it has a common plate (44) for closing off the two grooves (38) formed respectively in the free bottom edges (40) of the two side cheeks (20).

5. Wiper arm according to one of Claims 3 or 4, characterised in that the two spraying sections (36) are connected to a common supply section (38).

6. Wiper arm according to Claim 5 taken in combination with Claim 4, characterised in that a portion of the supply section (37) is formed by a groove formed in the bottom face (50) of the end (14) of the body of the wiper arm designed to be connected to means (16) for rotating the arm, and by a part of the closure plate (44) common to the two spraying sections (36).

7. Wiper arm according to any one of the preceding claims, characterised in that it includes a wiper having a wiper blade (34) and means (32) for connecting the blade (34) to the body (12) of the wiper arm (10), and in that the said connection means extend longitudinally within (24) the main part (18) of the body (12) of the wiper arm (10) between the side cheeks (20).

8. Wiper arm according to Claim 7, characterised in that each of the spraying sections (36) extends substantially over half the length of the wiper blade (34).

## Patentansprüche

1. Scheibenwischerarm (10), insbesondere zum Wischen der Scheibe eines Kraftfahrzeugscheinwerfers, umfassend einen Kunststoffkörper (12, 14, 18) und einen in den Körper des Scheibenwischerarms eingebauten Zuleitungs- und Spritzkanal für eine Scheibenwaschflüssigkeit, wobei ein länglicher Hauptteil (18) des Körpers (12) zwei parallele Seitenwände (20) umfaßt, die sich in der allgemeinen Längsrichtung des Scheibenwischerarms (10) erstrecken und die durch einen Rücken (22) miteinander verbunden sind, so daß der Hauptteil (18) des Körpers (12) im Querschnitt die Form eines umgekehrten U aufweist, **dadurch gekennzeichnet,** daß der Hauptteil (18) wenigstens einen Spritzabschnitt (36) umfaßt, der in einer der besagten Seitenwände (20) ausgebildet ist, und daß zum Spritzabschnitt (36) gehörende Spritzöffnungen (46) in der Nähe der freien Unterkante (40) dieser Seitenwand (20) münden.

2. Scheibenwischerarm nach Anspruch 1 , **dadurch gekennzeichnet,** daß der Spritzabschnitt (36) aus einer Nut (38), die an der freien Unterkante (40) der Seitenwand (20) ausgebildet ist, und aus einer Verschlußplatte (44) für die freie Seite der Nut besteht, in welche die Spritzöffnungen (46) eingearbeitet sind.

3. Scheibenwischerarm nach einem der Ansprüche 1 oder 2, **dadurch gekennzeichnet,** daß der Hauptteil (18) zwei Spritzabschnitte (36) umfaßt, die symmetrisch in jeder der beiden Seitenwände (20) ausgebildet sind.

4. Scheibenwischerarm nach Anspruch 3 in Kombination mit Anspruch 2, **dadurch gekennzeichnet,** daß er eine gemeinsame Verschlußplatte (44) für die beiden Nuten (38) umfaßt, die jeweils an den freien Unterkanten (40) der beiden Seitenwände (20) ausgebildet sind.

5. Scheibenwischerarm nach einem der Ansprüche 3 oder 4, **dadurch gekennzeichnet,** daß die beiden Spritzabschnitte (36) mit einem gemeinsamen Zuleitungsabschnitt (38) verbunden sind.

6. Scheibenwischerarm nach Anspruch 5 in Kombination mit Anspruch 4, **dadurch gekennzeichnet,** daß ein Teilstück des Zuleitungsabschnitts (37) aus einer Nut besteht, die an der Unterseite (50) des Endes (14) des Körpers des Scheibenwischerarms ausgebildet ist, das für die Verbindung mit Mitteln (16) für den drehenden Antrieb des Scheibenwischerarms vorgesehen ist, und aus einem Teil der gemeinsamen Verschlußplatte (44) für die beiden Spritzabschnitte (36).

7. Scheibenwischerarm nach einem der vorangehenen Ansprüche , **dadurch gekennzeichnet**, daß er ein Scheibenwischerblatt mit einem Wischgummi (34) und Mitteln (32) für die Verbindung des Wischerblatts (34) mit dem Körper (12) des Scheibenwischerarms (10) umfaßt und daß sich die besagten Verbindungsmittel in Längsrichtung im Innern (24) des Hauptteils (18) des Körpers (12) des Scheibenwischerarms (10) zwischen den Seitenwänden (20) erstrecken.

8. Scheibenwischerarm nach Anspruch 7 , **dadurch gekennzeichnet,** daß sich jeder der Spritzabschnitte (36) in etwa auf der halben Länge des Scheibenwischerblatts (34) erstreckt.
